(19) 

Europäisches
Patentamt
European
Patent Office
Office européen
des brevets

(11) **EP 1 858 016 A1**

(12) **EUROPEAN PATENT APPLICATION**

(43) Date of publication:
**21.11.2007 Bulletin 2007/47**

(51) Int Cl.:
*G11B 20/18* (2006.01)  *G11B 20/10* (2006.01)
*G11B 20/12* (2006.01)  *G11B 7/24* (2006.01)
*G11B 7/26* (2006.01)  *G11B 19/04* (2006.01)
*G11B 27/36* (2006.01)

(21) Application number: **06116867.0**

(22) Date of filing: **07.07.2006**

(84) Designated Contracting States:
**AT BE BG CH CY CZ DE DK EE ES FI FR GB GR
HU IE IS IT LI LT LU LV MC NL PL PT RO SE SI
SK TR**
Designated Extension States:
**AL BA HR MK YU**

(30) Priority: **28.04.2006 JP 2006126810**

(71) Applicant: **FUJITSU LIMITED**
**Kawasaki-shi,**
**Kanagawa 211-8588 (JP)**

(72) Inventor: **Hosokawa, Tetsuo**
**FUJITSU LTD.**
**Kawasaki-shi**
**Kanagawa 211-8588 (JP)**

(74) Representative: **Seeger, Wolfgang**
**Georg-Hager-Strasse 40**
**81369 München (DE)**

(54) **Reproducing apparatus manufacturing method, recording medium, and computer product**

(57)   A known error signal is recorded in a recording medium (N1,N2,N3) for testing. When manufacturing a reproducing apparatus (10), the recording medium (N1,N2,N3) for testing is used to check whether there is a deficiency in the reproducing apparatus (10).

EP 1 858 016 A1

## Description

BACKGROUND OF THE INVENTION

1. Field of the Invention

The present invention relates to a technology for checking a defective reproducing apparatus that reads data from a recording medium.

2. Description of the Related Art

Recordable optical disk media such as CD-Rs, CD-RWs, DVD-Rs, DVD-RWs, or DVD-RAMs have become common as compact data recording and playing media. Sometimes same device is used to record and play the data. Sometimes different devices are used to record the data and to play the data. An important requirement is that the data can be read without an error.

However, recording conditions, which are conditions at the time of recording data in a recording media can vary. The recording conditions change from one recording apparatus to other recording apparatus or from one recording medium to other recording medium, fluctuation in temperature or humidity inside the recording apparatus. Such variations in the recording conditions can cause issues or defects (hereinafter, "deficiencies") like distortion of a reproduced waveform or an increase in jitter. In the worst case, an error occurs to make it impossible to reproduce data.

It is common to use an inspection disk to check if there is any sever error in a recording media due to changes in the recording conditions. As such inspection disks a recording medium in which data is recorded under optimum conditions or a recording medium that has a reproduction failure because of some cause are used.

Japanese Patent No. 3674545, Japanese Patent Application Laid-Open Nos. H10-233040, H10-83506, 2000-322782, 2002-334481, and H9-274741 disclose methods of manufacturing an inspection disk.

In the conventional reproduction inspection, a recording medium not affected by various fluctuation factors related to recording in which data is recorded under optimum conditions is used as a reproduction inspection disk of a reproducing apparatus. Alternatively, an inspection is carried out in the market using an actual recording medium that has a reproduction failure because of a cause related to recording and a method of improvement is examined.

In the actual market, conditions of recording in a recording medium fluctuate because of various causes. Recording media in which data is recorded under various conditions have to be played without an error. However, even if inspection of a reproducing apparatus is performed using a recording media in which data is recorded under conditions close to ideal conditions without taking into account various fluctuations at the time of recording as described above, it is impossible to predict deficiencies concerning play of recording media in which data is recorded under various recording conditions in the market.

In the method of using, for inspection or evaluation, a recording medium that has deficiencies in the market, since a cause of fluctuation in recording conditions is unknown, it is highly likely that the inspection is one-sided. There is also a problem in that a policy for improvement of a reproduction quality is not obtained.

The methods of manufacturing a reproduction inspection disk are disclosed in the patent documents 1 to 5. However, the methods are methods of deforming substrate shapes like unevenness of a recording surface and a substrate warp of a recording medium. It is impossible to reproduce irregularity of a reproduced waveform due to fluctuation in conditions of recording in recording media such as a CD-R, a CD-RW, a DVD-R, and a DVD-RW. Even with the method of manufacturing a disk for inspecting reproduction disclosed in the patent document 6, it is impossible to reproduce the irregularity of a reproduced waveform due to fluctuation in recording conditions described above.

A factor of variation of disks actually shipped to the market is not only deformation of substrate shapes such as a warp of a substrate and unevenness of a recording surface but also general variation including variation in recording conditions. Thus, a serious problem of a quality like a reproduction error occurs.

SUMMARY OF THE INVENTION

It is an object of the present invention to at least partially solve the problems in the conventional technology.

According to an aspect of the present invention, a method of manufacturing a reproducing apparatus that reproduces a signal recorded in a recording medium includes reproducing a signal from a recording medium in which the signal is recorded according to a set value, the set value being a value that causes deterioration in a quality of a reproduced signal of an index representing a magnitude of a cause affecting deterioration in a quality of a reproduced signal at the time of signal reproduction; and determining, based on reproduced signal, whether there is a deficiency in the reproducing apparatus.

According to another aspect of the present invention, a recording medium that records a signal representative of data, wherein the signal is recorded according to a set value for deteriorating a quality of a reproduced signal of an index representing a magnitude of a cause affecting deterioration in a quality of a reproduced signal at the time of signal reproduction.

According to still another aspect of the present invention, a computer-readable recording medium stores therein a computer program that causes a computer to implement the above method.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

Fig. 1 is a schematic of a recording waveform;
Fig. 2 is a schematic for explaining marks formed on a recording medium according to an embodiment of the present invention;
Fig. 3 is a schematic of reproduced waveforms of the marks shown in Fig. 2;
Fig. 4 is a schematic of reproduced waveforms for explaining heat accumulation;
Fig. 5 is a schematic for explaining tracking servo deviation;
Fig. 6 is a schematic for explaining focus servo deviation;
Fig. 7 is a perspective for explaining power-over of recording in adjacent tracks;
Fig. 8 is a graph for explaining the change in a degree of modulation at the time when a shape of an entire waveform is kept and power of the entire waveform is changed;
Fig. 9 is a graph for explaining the relation between a pulse width of a recording waveform and symmetry;
Fig. 10 is a graph for explaining the relation between the pulse width of the recording waveform and heat accumulation;
Fig. 11 is a table of an example of an orthogonal array according to the embodiment;
Fig. 12 is a schematic of an inspection system according to the embodiment;
Fig. 13 is a detailed functional block diagram of an inspection apparatus shown in Fig. 12;
Fig. 14 is a table of an example of a contribution ratio calculated by a cause determining unit shown in Fig. 12;
Fig. 15 is a flowchart of a process procedure performed by the inspection apparatus shown in Fig. 13;
Fig. 16 is a perspective of a recording medium according to another embodiment; and
Fig. 17 is a hardware configuration of a computer that implements the procedures, methods, steps according to the above embodiments.

DETAILED DESCRIPTION OF THE PREFERRED EMBODIMENTS

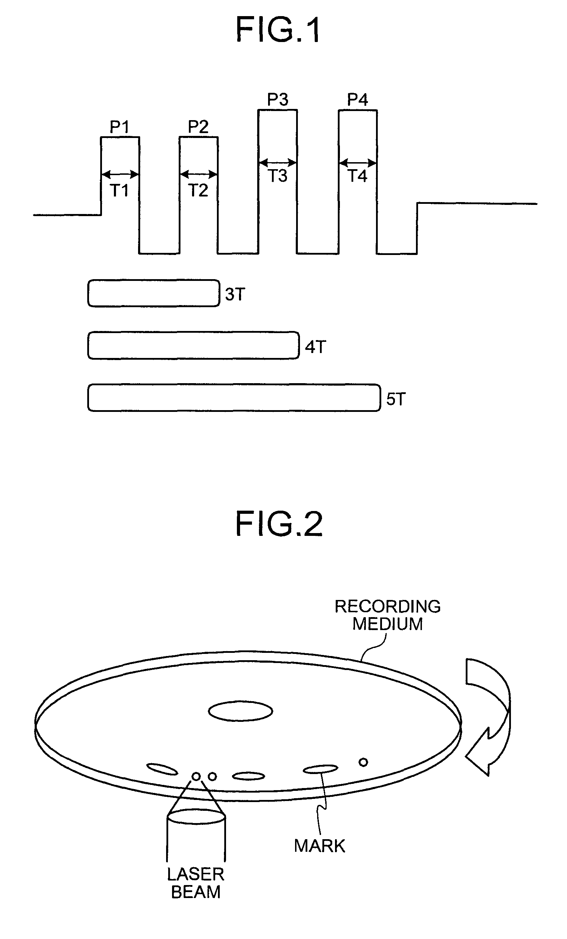

Exemplary embodiments of the present invention are explained in detail below with reference to the accompanying drawings.
First, an overview and characteristics of the embodiments of the present invention are explained. In the embodiments, in a process for manufacturing a reproducing apparatus, a signal is reproduced from a recording medium in which the signal is recorded according to set values (a quality of a reproduced signal is deteriorated by shifting the set values from an optimum value; in the present invention, the set values are intentionally shifted from the optimum value) of indexes representing magnitudes of causes (e.g., a degree of modulation, symmetry, heat accumulation, deviation of tracking, defocus, and crosstalk due to power-over of recording in adjacent tracks) affecting deterioration in a quality of a reproduced signal at the time of signal reproduction. It is determined, based on the signal reproduced, whether there is a deficiency in the reproducing apparatus.
When there is a deficiency in the reproducing apparatus, a cause of the deficiency is determined based on the set values of the respective causes and the reproduced signal from the recording medium. An operator readjusts the reproducing apparatus based on a result of the determination. When there is no deficiency in the reproducing apparatus, the manufacturing process directly shifts to the next manufacturing process.
In this way, a signal is reproduced from the recording medium, in which the signal is recorded, according to the set values of the indexes representing magnitudes of causes affecting deterioration in a quality of a reproduced signal at the time of signal reproduction. It is determined, based on the signal reproduced, whether there is a deficiency in the reproducing apparatus. This makes it possible to quantitatively reproduce a plurality of causes of fluctuation related to recording in the market and improve a quality of compatibility of reproduction for recording media in the market.
In the present invention, the manufacturing method is the same as the conventional manufacturing method for a reproducing apparatus other than the inspection method for a reproducing apparatus described above. Thus, in the following embodiment, the inspection method for a reproducing apparatus is intensively explained and other explanations are omitted.
The causes affecting deterioration in a quality at the time of signal reproduction are explained in order. First, an example of a recording waveform for recording a signal in a recording medium (a thermal-recording information recording medium such as a CD-R, a DVD-R, or a DVD-RW or the like (hereinafter, "recording medium") is explained using Fig. 1. Fig. 1 is a schematic of recording waveforms of a signal recorded in a recording medium according to an embodiment of the present invention. At the time of recording, marks having different lengths are formed on the recording medium by changing a pulse number shown in Fig. 1. Fig. 2 is a diagram for explaining the marks formed on the recording medium. As shown in Fig. 2, marks having different lengths are formed on the recording medium by changing the pulse number shown in Fig. 1. The marks can be formed by changing the time for irradiating laser beams on the recording medium with different pulse number.

For example, when the pulse number is two (P1 and P2), a mark 3T is formed on the recording medium. When the pulse number is three (P1, P2, and P3), a mark 4T is formed on the recording medium. When the pulse number is four (P1, P2, P3, and P4), a mark 5T is formed on the recording medium. In general, nine kinds of marks, 3T to 11T, can be formed. In other words, 3T is a shortest mark and 11T is a longest mark.

The recording waveform in Fig. 1 is optimally set such that jitter or an error is minimized in a design stage of a drive device. However, in the market, various problems such as an environmental temperature change and deterioration occur. Even if there is irregularity in recording marks, if the recording medium is played by a drive device used for recording, it is less likely that the irregularity in recording marks leads to an error. This is because the signal is recorded under conditions matching reproduction characteristics of the drive device according to a verify operation of the drive device.

However, when the recording medium is played by a drive device different from the drive device used for recording, there may be a problem in that the recording medium cannot be played if marks (signals) recorded deviate from an ideal and irregularity occurs in a reproduced waveform. For example, when music, a movie, or the like is recorded in a CD-R or a DVD-R by a recording apparatus for home use and the recording medium is played by a CD or DVD playing apparatus mounted on a vehicle, a reproduction error due to such fluctuation in conditions at the time of recording may occur.

To prevent such problems of reproduction failure from occurring in the market, it is sufficient to carry out evaluation or inspection using a medium in which a deficiency in the market is appropriately reproduced and carry out optimization of design or shipment inspection for the reproducing apparatus.

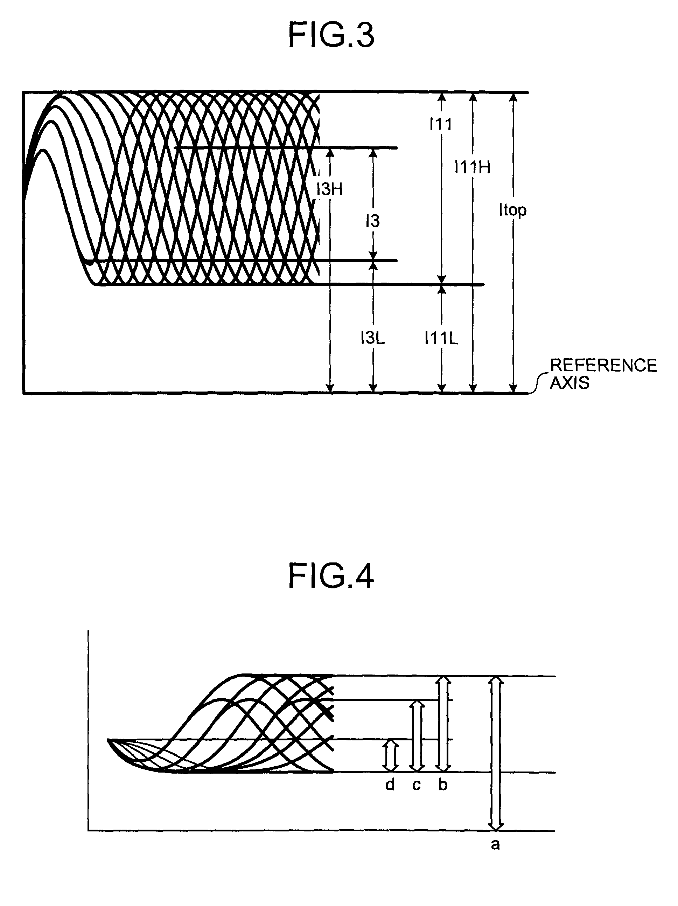

Fig. 3 is a schematic of reproduced waveforms of the marks shown in Fig. 2. In the figure, Itop indicates a distance between a maximum value of all the reproduced waveforms and a reference axis. I11H indicates a distance between a maximum value of a reproduced waveform for a longest mark (11T) recorded in the recording medium and the reference axis. I3H indicates a distance between a maximum value of a reproduced waveform for a shortest mark (3T) recorded in the recording medium and the reference axis.

I11L indicates a distance between a minimum value of the reproduced waveform for the longest mark (11T) and the reference axis. I3L indicates a distance between a minimum value of the reproduced waveform for the shortest mark (3T) and the reference axis. I11 and I3 are a value obtained by subtracting I3L from I3H and a value obtained by subtracting I11L from I11H, respectively.

A degree of modulation and symmetry affecting deterioration in a quality of a reproduced signal are explained using Fig. 3. The degree of modulation is defined by I11/Itop. When this degree of modulation decreases because of fluctuation in recording conditions, jitter at the time of signal reproduction increases and a reproduction error tends to occur.

The symmetry is a value indicating an amount of deviation between an amplitude center of the longest mark (11T) and an amplitude center of the shortest mark (3T). The symmetry is defined by $((I3H+I3L)-(I11H+I11L))/2\times I11H$. When this symmetry decreases because of fluctuation in recording conditions, jitter at the time of signal reproduction increases and a reproduction error tends to occur.

Heat accumulation affecting deterioration in a quality of a reproduced signal is explained using Fig. 4. Fig. 4 is a schematic of reproduced waveforms for explaining the heat accumulation. The heat accumulation is defined by d/b. In d/b, b is a value indicating a distance from a maximum value to a minimum value of the reproduced waveforms and d indicates a distance from the minimum value of the reproduced waveforms to a flat portion of waveforms (or a maximum value of the waveforms, etc.) different from the original reproduced waveforms (caused by an influence of the heat accumulation). When d/b increases, jitter increases and a reading error tends to occur.

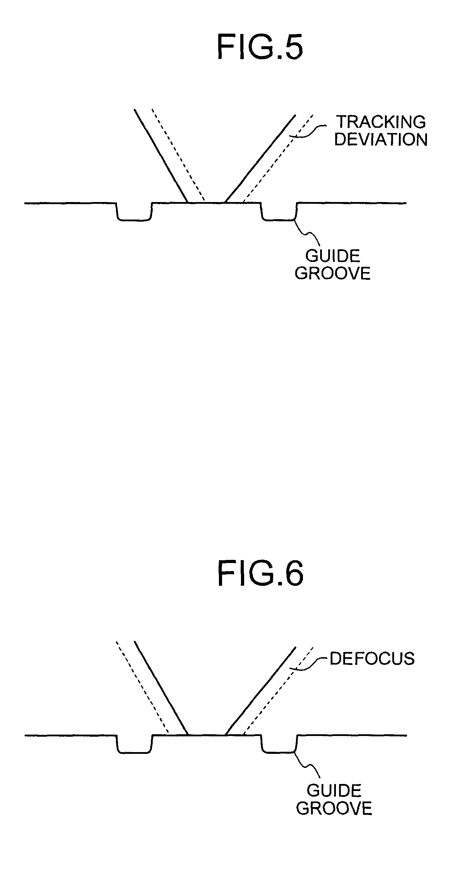

As a cause affecting a reproduction quality at the time of recording, there is fluctuation related to servo other than the fluctuation related to a recording waveform. Fig. 5 is a schematic for explaining tracking servo deviation. Recording may be performed in a state in which a laser 0 beam spot deviates from a track center because of an influence of inclination of an optical head of a device used for recording, aberration of a lens, and the like. When a mark recorded in a spot position deviating from the track center is reproduced by a reproducing apparatus having a beam spot in the center, jitter increases and an error tends to occur.

Fig. 6 is a schematic for explaining focus servo deviation. Irregularity may occur in a beam shape because of aberration of optical components such as a lens used in an optical head of a drive device to increase a beam diameter as shown in Fig. 6. When a mark recorded with a large beam diameter is reproduced, jitter increases and an error tends to occur.

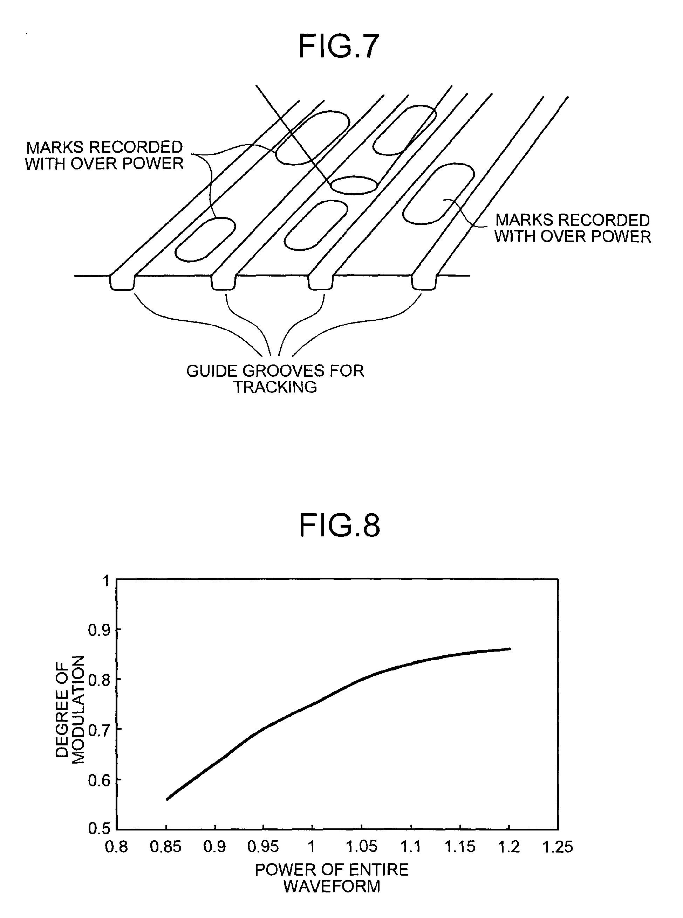

Fig. 7 is a perspective for explaining power-over of recording in adjacent tracks. As shown in Fig. 7, when marks are recorded in the adjacent tracks with over-power, leaking signals to a reproduction track increases (because the leaking signals are affected by crosstalk due to the power-over of recording in the adjacent tracks) and jitter increases.

A plurality of factors of fluctuation related to recording represented by the above description simultaneously occur in the market complexly. A method of creating a recording medium with a state in which these factors of fluctuation simultaneously occur quantitatively reproduced and inspecting and evaluating the recording medium is explained below.

In the following explanation, a CD-R medium is explained as an example. However, the present invention is not limited to the application to the CD-R. It is also possible to apply the present invention to other thermal-recording medium such as a CD-RW, a DVD-R, a DVD-RW, a DVD-RAM, and a blu-ray disk. It is also possible to realize the same reproduced waveforms with a ROM medium without performing recording in a recording medium. It is possible to stably set the levels of the various characteristics with high reproducibility by reproducing a plurality of fluctuations in recording as phase pits using the ROM medium.

Power of the entire waveform in Fig. 1 only has to be reduced to reduce a degree of modulation. First, power and a pulse width of the reproduced waveform in Fig. 1 are adjusted to minimize jitter. The waveform shown in Fig. 1 is a recording waveform that minimizes jitter. A change in a degree of modulation at the time when the setting of power, a pulse width, and the like of this optimum recording waveform is set as 1, a shape of the entire waveform is kept, and power of the entire waveform is changed is explained with reference to Fig. 8. Fig. 8 is a graph for explaining the change in a degree of modulation at the time when a shape of the entire waveform is kept and power of the entire waveform is changed. As shown in Fig. 8, it is possible to adjust a degree of modulation I11/Itop by keeping the shape of the recording waveform and changing power of the entire waveform.

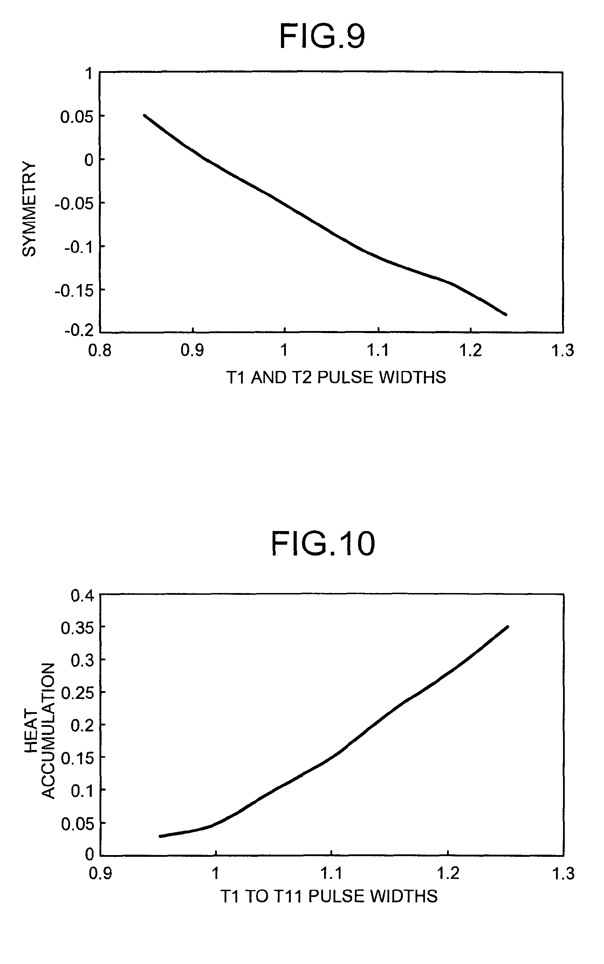

Fig. 9 is a graph for explaining the relation between a pulse width of a recording waveform and symmetry. As shown in the figure, it is possible to change the symmetry by adjusting pulse widths (T1 and T2 shown in Fig. 1) for forming a shortest mark (3T) in a recording medium.

Fig. 10 is a graph for explaining the relation between a pulse width of a recording waveform and heat accumulation. As shown in the figure, it is possible to change the heat accumulation by adjusting pulse widths (T3 to T11) of the recording waveform.

It is possible to create a recording medium reflecting actual fluctuation in the market by setting the degree of modulation, the symmetry, and the heat accumulation in the following range according to the method described above.

Dedree of modulation      0.6<I11/Itop<0.8

Symmetry      -0.15<((I3H+I3L)-(I11H+I11L))/2×I11H<-0.05

Heat accumulation      0.1<d/b<0.3

In the above explanation, the three factors, namely, the degree of modulation, the symmetry, and the heat accumulation are discussed as causes of fluctuation related to recording. However, factors affecting a quality at the time of reproduction are not limited to these three factors. Other factors may be added. A method of adjusting a recording waveform for reproducing factors of fluctuation is not limited to the method described above.

A recording medium (a disk for inspection) better reflecting the fluctuation in the market is realized by setting fluctuation related to servo at the time of recording in the following range. It is possible to efficiently and quantitatively realize inspection in an environment close to an actual environment in the market.

Defocus      -0.8 to 0.8 micrometers

Tracking deviation      -0.2 to 0.2 micrometers

Power of recording in adjacent tracks      0 to +15%

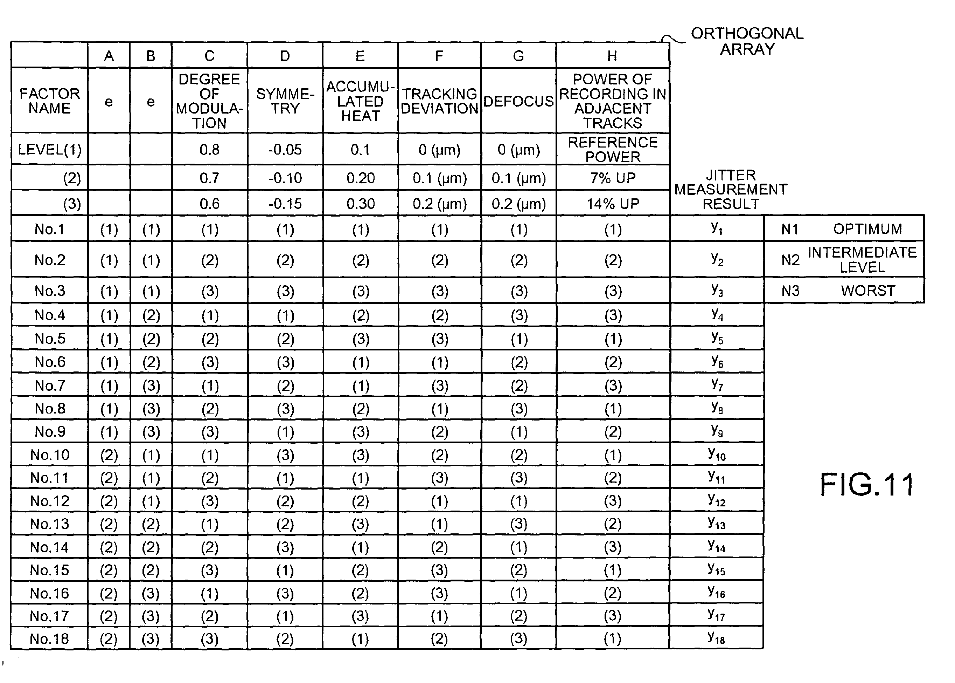

It is possible to perform reasonable evaluation with actual fluctuation in the market reproduced by setting levels of the respective causes (the degree of modulation, the symmetry, the heat accumulation, the defocus, the tracking deviation, the power of recording in adjacent tracks) discussed above according to levels of an orthogonal array. Fig. 11 is a table of an example of an orthogonal array according to the embodiment. Set values (1) to (3) corresponding to lines of No. 1 to No. 18 of the orthogonal array correspond to levels (1) to (3) in the orthogonal array, respectively. For example, the set value (1) at a point where the row "No. 1" and a column "C" cross is the level (1) of the degree of modulation "0.8".

When the an orthogonal array L18 shown in Fig. 11 is used, a recording medium in which recording conditions are changed in eighteen combinations in total and inspection of a reproducing apparatus is carried out based on eighteen data. For example, jitters $y_1$ to $Y_{18}$ are measured in each of the eighteen rows to carry out overall determination according to the following calculation method. An example in which inspection of the reproducing apparatus is carried out using jitter is described here. However, the present invention is not limited to this. For example, inspection of the reproducing apparatus may be carried out using an error ratio at the time of reproduction.

An equation for performing the overall determination for the reproducing apparatus is defined as follows:

$$S_T = y_1{}^2 + y_2{}^2 + \ldots + y_{18}{}^2$$

$$V_T = S_T/18$$

$$\eta = 10 \, LOG \, (1/V_T) \quad (db)$$

A reference value is set to η calculated by this equation. When a value of η is equal to or larger than the reference value, it is determined that there is no deficiency in the reproducing apparatus. When a value of η is smaller than the reference value, it is determined that there is a deficiency and shipment of the reproducing apparatus is stopped. Concerning the reproducing apparatus having a deficiency, it is possible to identify a factor contributing to the deficiency most among the six factors and find a policy of adjustment by analyzing the factors allocated to the orthogonal array.

The evaluation is explained using the orthogonal array L18. However, levels of the factors may be set using other orthogonal arrays L9, L8, L12, and the like. Levels of all the six factors may be set in three levels like an optimum level, an intermediate level, and a worst level without using the orthogonal array. In this case, three jitters only have to be measured from three media to carry out the overall determination according to the equation described above.

It is also possible to set inspection conditions of the three levels by using an orthogonal array with three levels. A method of creating the three levels, namely, the optimum level, the medium level, and the worst level using an orthogonal array is explained in Fig. 11 with the orthogonal array L18 as an example. In eight columns A to H, levels of six columns on the right side (C to H) are common at 1, 2, and 3.

It is possible to create conditions N1, N2, and N3 by allocating the six kinds of error factors described above to the six columns with this common level setting and setting levels of the six factors to be the optimum level, the medium level, and the worst level. By allocating the factors in this way, in the case of inspection of determination of a deficiency, it is possible to realize efficiency through reduction in an inspection time using only three kinds of recording media (N1 to N3). When a cause of a deficiency of a reproducing apparatus having the deficiency is analyzed to check a method of rectification, it is possible to check which of the six factors causes the deficiency by measuring other fifteen recording media as well.

In this example, the method of creating three levels using an orthogonal array is explained with the orthogonal array L18 as an example. In the explanation of the example, factors are not allocated to A and B columns in the orthogonal array shown in Fig. 11. However, since levels of the two columns are fixed, other fluctuation factors may be allocated to the columns as factors. Fluctuation factors related to a substrate and a film like substrate surface variation (warp), substrate thickness fluctuation, and reflectance fluctuation may be allocated to the two columns. Alternatively, factors related to recording other than the six factors described above may be allocated to the two columns.

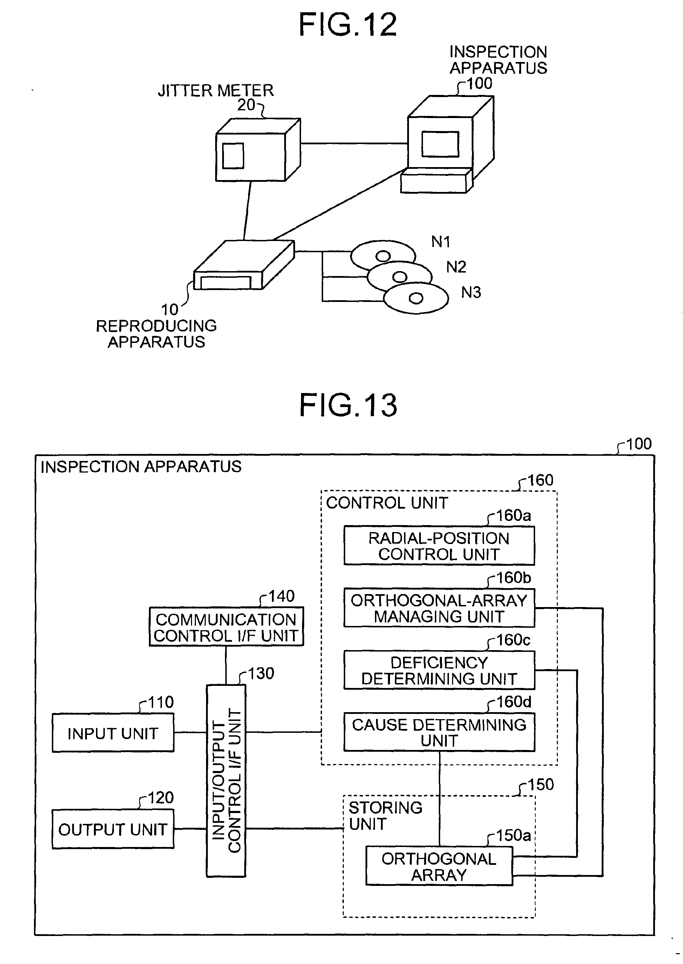

An inspection method according to this example is explained. Fig. 12 is a schematic of an inspection system according to the embodiment. The recording media N1, N2, and N3 are prepared for a reproducing apparatus 10 to be inspected. The respective recording media are input in the reproducing apparatus 10, reproduced waveforms are inputted to a jitter meter 20 that measures jitter. An inspection apparatus 100 controls a measurement radial position of the reproducing apparatus 10 and acquires the jitter from the jitter meter 20 to perform deficiency determination for the reproducing apparatus 10.

A structure of the inspection apparatus 100 shown in Fig. 12 is explained. Fig. 13 is a detailed functional block diagram of the inspection apparatus 100. The inspection apparatus 100 includes an inputting unit 110, an outputting unit 120, an input/output control I/F unit 130, a communication control I/F unit 140, a storing unit 150, and a control unit 160.

Among the units, the inputting unit 110 is for inputting various kinds of information and includes a keyboard, a mouse, and a microphone. For example, a user inputs various kinds of information stored in the orthogonal array (see Fig. 11) using the inputting unit 110. A monitor (the outputting unit 120) described later also realizes a pointing device function in cooperation with the mouse.

The outputting unit 120 is outputting means for outputting various kinds of information and includes a monitor (or a display or a touch panel) and a speaker. For example, the outputting unit 120 outputs the various kinds of information stored in the orthogonal array and information on a deficiency and the like related to the reproducing apparatus 10. The input/output control I/F unit 130 is means for controlling input and output of data by the inputting unit 110 and the outputting unit 120. The communication control I/F unit 140 is means for controlling communication between the reproducing apparatus 10 and the jitter meter 20.

The storing unit 150 is storing means for storing data and programs necessary for various kinds of processing by the control unit 160. In particular, as an orthogonal array closely related to the present invention, the storing unit 150 includes an orthogonal array 150a as shown in Fig. 13. As described above, the orthogonal array 150a is storing means for storing set values of respective causes in recording signals in the recording media (see Fig. 11).

The control unit 160 is control means that has an internal memory for storing programs and control data defining various processing procedures and executes various kinds of processing according to the programs and the control data. In particular, as units closely related to the present invention, as shown in Fig. 13, the control unit 160 includes a radial-position control unit 160a, an orthogonal-array managing unit 160b, a deficiency determining unit 160c, and a cause determining unit 160d.

The radial-position control unit 160 is a processing unit that controls the reproducing apparatus 10 to control measurement radial positions on the recording media. The orthogonal-array managing unit 160b is a processing unit that manages the orthogonal array 150a.

The orthogonal-array managing unit 160b acquires information for identifying the recording media (N. 1 to No. 18 or N1 to N3, etc.) and information on a jitter measurement result from the jitter meter 20 and registers and updates values of the jitter measurement results $y_1$ to $y_{18}$ of the orthogonal array 150a based on the information acquired. The orthogonal-array managing unit 160b changes the set values of the orthogonal array 150a, for example, when a change request for the set value of the orthogonal array 150a is received from the inputting unit 110.

The deficiency determining unit 160c is a processing unit that determines whether there is a deficiency in the reproducing apparatus 10. Specifically, the deficiency determining unit 160c calculates an evaluation value based on the respective jitter measurement results $y_1$ to $y_{18}$ recorded in the orthogonal array 150a (a specific equation for calculating the evaluation value is the same as the equation for calculating $\eta$ described above) and determines whether the evaluation value calculated is equal to or larger than a reference value set in advance.

When the evaluation value is equal to or larger than the reference value, the deficiency determining unit 160c determines that there is no deficiency in the reproducing apparatus 10 and outputs a result of the determination to the monitor (the outputting unit 120). On the other hand, when the evaluation value is smaller than the reference value, the deficiency determining unit 160c determines that there is a deficiency in the reproducing apparatus 10 and outputs a result of the determination to the monitor (the outputting unit 120).

The deficiency determining unit 160c can improve efficiency of manufacturing of reproducing apparatuses by performing deficiency determination using only the jitter measurement results $y_1$ to $y_3$ (or using the recording media N1 to N3).

The cause determining unit 160d is a processing unit that determines, when it is determined by the deficiency determining unit 160c that there is a deficiency in the reproducing apparatus 10, a cause that is highly likely to affect this deficiency most.

The cause determining unit 160d calculates, using a statistical method, a contribution ratio from the set values set in the respective causes (the degree of modulation, the symmetry, the heat accumulation, the tracking deviation, the defocus, the power of recording in adjacent tracks, and the like) of the orthogonal array (the set values set in the respective recording media No. 1 to No. 18) and the jitter measurement results $y_1$ to $y_{18}$ measured from the respective recording media. The cause determining unit 160d determines that a cause, for which this contribution ratio is the highest, is a cause that is highly likely to affect the deficiency of the reproducing apparatus 10 most.

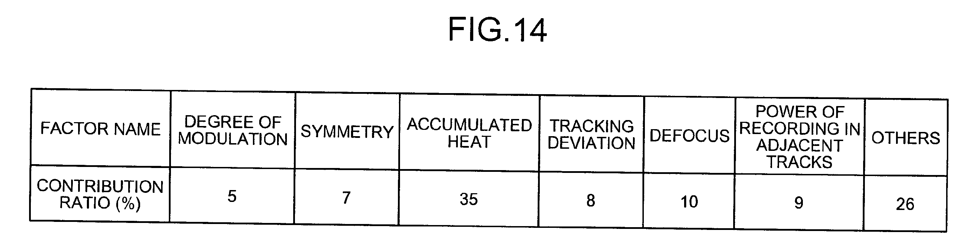

Fig. 14 is a table of an example of a contribution ratio calculated by the cause determining unit 160d. In the example shown in the figure, since a contribution ratio of heat accumulation is the largest, this heat accumulation affects the deficiency of the reproducing apparatus 10 most. The cause determining unit 160d outputs information on a result of the determination or the contribution ratio calculated. An operator can accurately adjust the reproducing apparatus 10 and eliminate the deficiency by referring to the result of the determination of the cause determining unit 160d.

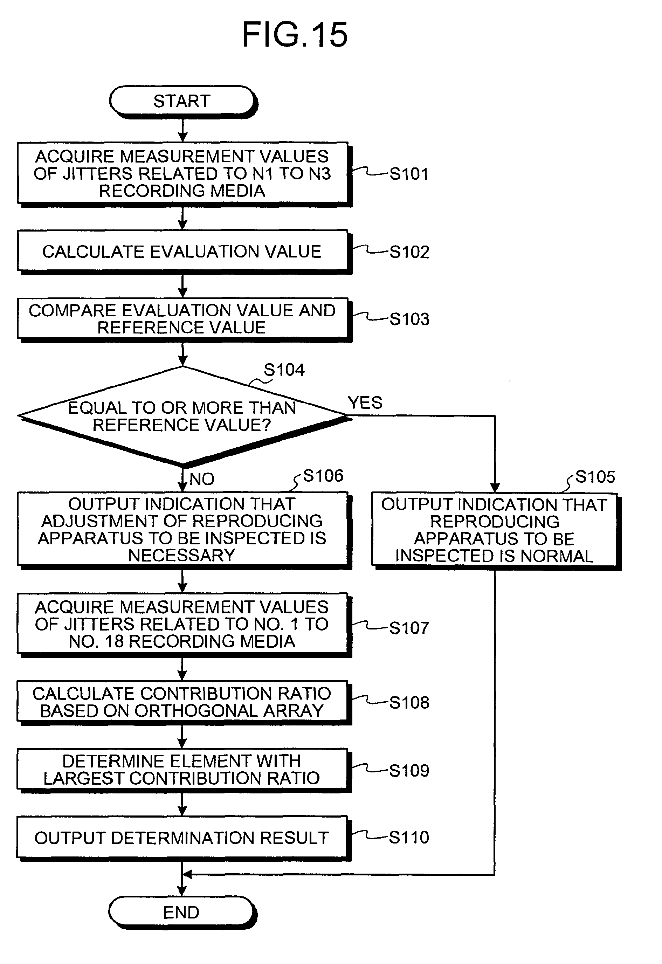

Processing of the inspection apparatus 100 according to this example is explained. Fig. 15 is a flowchart of a process procedure performed by the inspection apparatus 100. In the flowchart shown in Fig. 15, the recording media N1 to N3 are used in determination of a deficiency. As shown in the figure, the inspection apparatus 100 acquires measurement values of jitters related to the recording media N1 to N3 (step S101). At step S101, the recording media N1 to N3 are inserted into the inspection apparatus 100 in order. The jitter meter 20 outputs jitter measurement results of the respective recording media to the inspection apparatus 100 in order.

Subsequently, the deficiency determining unit 160c calculates an evaluation value based on the respective jitter measurement results (step S102), compares the evaluation value with a reference value (step S103), and determines whether the evaluation value is equal to or larger than the reference value (step S104).

When the evaluation value is equal to or larger than the reference value ("Yes" at step S104), the deficiency determining unit 160c outputs an indication that the reproducing apparatus to be inspected is normal to the monitor (the outputting unit 120) (step S105).

On the other hand, when the evaluation value is smaller than the reference value ("No" at step S104), the deficiency determining unit 160c outputs an indication that adjustment of the reproducing apparatus to be inspected is necessary (step 5106). The inspection apparatus 100 acquires measurement values of jitters of the recording media No. 1 to No. 18 (step S107). At step S107, the recording media No. 1 to No. 18 are inserted into the reproducing apparatus 10 in order. The jitter meter 20 outputs jitter measurement results of the respective recording media to the inspection apparatus 100 in order.

The cause determining unit 160d calculates a contribution ratio based on the orthogonal array 150a (step S108), determines an element with a largest contribution ratio (step S109), and outputs a result of the determination (step S110).

By using the inspection apparatus 100 in this way, inspection of the reproducing apparatus 10 is executed using recording media with irregularity of reproduced waveforms quantitatively reproduced according to set values of an orthogonal array. Thus, it is possible to manufacture a reproducing apparatus with a quality of compatibility of reproduction improved.

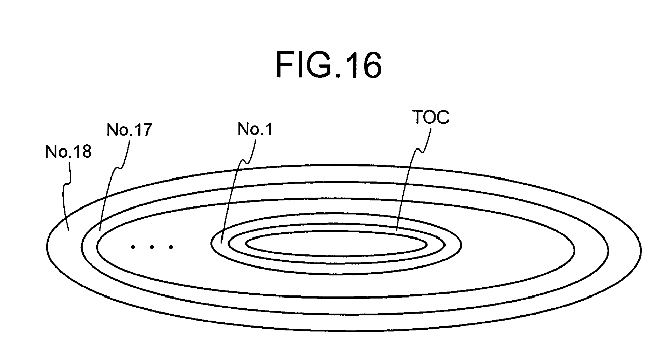

The method of creating one recording medium for each cause of fluctuation to manufacture a reproducing apparatus has been explained. However, when one recording medium is prepared for each condition, inspection work is complicated. This is not preferable in terms of efficiency of work. Fig. 16 is a perspective of a recording medium according to another embodiment. As shown in Fig. 16, eighteen kinds of complex causes may be divided and recorded in one medium.

If radial position information of recording areas of respective eighteen conditions is recorded in a TOC area, the inspection apparatus 100 can control a reproduction object position. It is possible to automatically execute deficiency and cause determination for a reproducing apparatus simply by inserting one recording medium into the reproducing apparatus 10. In addition to the causes related to recording, fluctuation factors related to a substrate and a film such as substrate surface variation, substrate thickness, and reflectance may be added.

As described above, in the process for manufacturing a reproducing apparatus, the inspection apparatus 100 reproduces a signal from a recording medium, in which the signal is recorded, according to set values (a quality of a reproduced signal is deteriorated by shifting the set values from an optimum value; the set values are intentionally shifted from the optimum value) of indexes representing magnitudes of causes (e.g., a degree of modulation, symmetry, heat accumulation, deviation of tracking, defocus, and crosstalk due to power-over of recording in adjacent tracks) affecting deterioration in a quality of the reproduced signal at the time of signal reproduction. The inspection apparatus 100 determines, based on the signal reproduced, whether there is a deficiency in the reproducing apparatus. This makes it possible to quantitatively reproduce a plurality of fluctuation factors related to recording in the market and improve a quality of compatibility of reproduction for recording media in the market.

The inspection apparatus 100 calculates a contribution factor based on the set values of the respective causes and measurement results of jitter and determines which factor is a factor for a deficiency of the reproducing apparatus 10. Thus, the operator can efficiently adjust the reproducing apparatus. The operator does not need to specify a cause of the deficiency. Thus, burdens on the operator are substantially reduced.

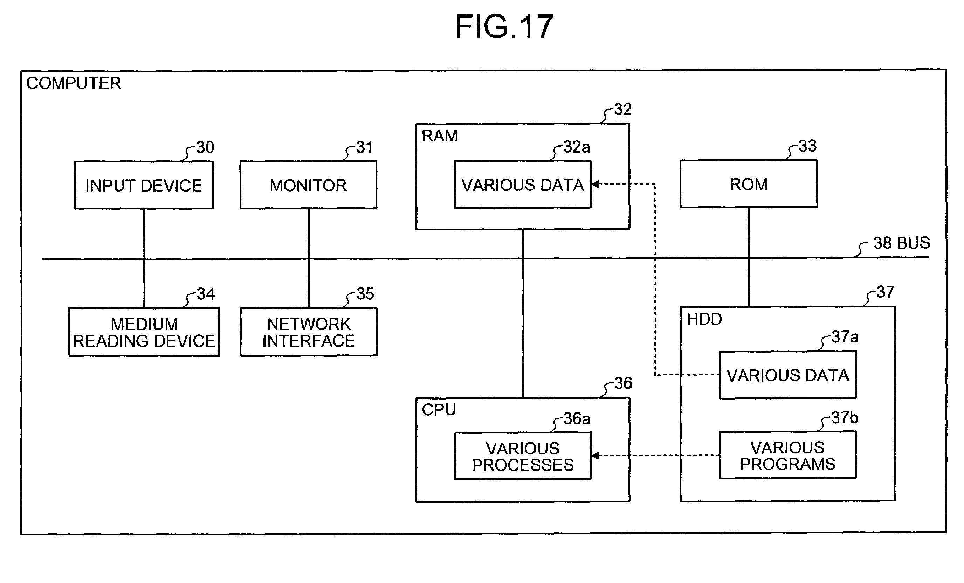

It is possible to realize the various kinds of processing explained in the example by executing programs prepared in advance with a computer. Thus, in the following explanation, an example of the computer that executes the programs for realizing the various kinds of processing is explained using Fig. 17.

Fig. 17 is a hardware configuration of a computer that implements the procedures, methods, steps according to the above embodiments. This computer is constituted by connecting, via a bus 38, an input device 30 that receives input of data from a user, a monitor 31, a random access memory (RAM) 32, a read only memory (ROM) 33, a medium reading device 34 that reads programs from recording medium having various programs recorded therein, a network interface 35 that exchanges data with other computers via a network, a central processing unit (CPU) 36, and a hard disk drive (HDD) 37.

Various programs 37b showing the same functions as the functions of the inspection apparatus 100 described above are stored in the HDD 37. The CPU 36 reads out the computer programs 37b from the HDD 37 and executes the programs. Consequently, various processes 36a for realizing the functions of the functional units of the inspection apparatus 100 described above are started.

Various data 37a corresponding to the data stored in the storing unit 150 of the inspection apparatus 100 described above are stored in the HDD 37. The CPU 36 stores the data 37a in the HDD 37, reads out the data 37a from the HDD 37 and stores the data 37a in the RAM 32, and executes data processing based on the various data 32a stored in the RAM 32.

The computer programs 37b do not always have to be stored in the HDD 37 from the beginning. For example, the computer programs 37b may be stored in a "portable physical medium" such as a flexible disk (F), a CD-ROM, a DVD disk, a magneto-optical disk, or an IC card inserted into the computer, a "fixed physical medium" such as a hard disk drive (HDD) provided on the inside or the outside of the computer, "other computers (or servers)" connected to the computer via a public line, the Internet, a LAN, a WAN, or the like. The computer may read out the computer programs 37b from these media and executes the computer programs 37b.

The example of the present invention has been explained. However, the present invention may be carried out in various different embodiments within the scope of the technical idea described in claims other than the example described above.

Among the respective kinds of processing explained in the example, all or a part of the kinds of processing explained as being automatically performed may be manually performed. All or a part of the kinds of processing explained as being manually performed may be automatically performed by a publicly known method.

Besides, the information including the processing procedures, the control procedures, the specific names, and the various data and parameters explained in this specification and shown in the drawings may be arbitrarily changed unless specifically noted otherwise.

The respective components of the respective devices shown in the figures are functionally conceptual and are not always required to be physically constituted as shown in the figures. In other words, specific forms of distribution and integration of the components of the respective apparatuses are not limited to those shown in the figures. It is possible to constitute all or a part of the components to be functionally or physically distributed and integrated in an arbitrary unit according to various loads, states of use, and the like.

Moreover, all or an arbitrary part of the respective processing functions performed in the respective devices can be realized by a CPU and programs analyzed and executed by the CPU or can be realized as hardware according to the wired logic.

According to one aspect, a signal is reproduced from the recording medium, in which the signal is recorded, according to set values for deteriorating a quality of a reproduced signal of indexes representing magnitudes of causes affecting deterioration in a quality of a reproduced signal at the time of signal reproduction. It is determined, based on the signal reproduced, whether there is a deficiency in the reproducing apparatus. This makes it possible to solve the problem of reproduction failure of the reproducing apparatus due to irregularity of a reproduced waveform.

According to another aspect, when it is determined that there is a deficiency in the reproducing apparatus, a cause of the deficiency with respect to the reproducing apparatus is determined based on the set values set in advance and the signal reproduced from the recording medium. This makes it possible to accurately execute adjustment for the reproducing apparatus in which the deficiency occurs.

According to still another aspect, reproduced signals are reproduced from a plurality of recording media in which signals are recorded according to different set values. It is determined, based on signals reproduced from the respective recording media, whether there is a deficiency in the reproducing apparatus. This makes it possible to appropriately perform investigation of the reproducing apparatus and improve performance of the reproducing apparatus.

According to still another aspect, signals are reproduced from a part of the recording media. It is determined, based on the signals reproduced from the part of the recording media, whether there is a deficiency in the reproducing apparatus. This makes it possible to efficiently manufacture the reproducing apparatus.

According to still another aspect, the set values of the signal recorded in the recording medium are set to levels indicated by an orthogonal array. This makes it possible to appropriately perform investigation of the reproducing apparatus with a recording medium capable of quantitatively reproducing irregularity of a reproduced waveform that could occur in the market.

According to still another aspect, the set values of the signal recorded in the recording medium are set to a level indicated by an orthogonal array with three levels. The signal of the recording medium, in which the signal is recorded, is reproduced according to three kinds of set values corresponding to the orthogonal array with three levels. It is determined, based on the signal reproduced, whether there is a deficiency in the reproducing apparatus. This makes it possible to efficiently manufacture the reproducing apparatus.

According to still another aspect, the recording medium divides and stores signals recorded according to different set values in a plurality of areas, respectively. The signals recorded in the respective areas of this recording medium are reproduced. It is determined, based on the signals reproduced from the respective areas, whether there is a deficiency in the reproducing apparatus. This makes it possible to the eliminate necessity of replacing the recording medium and promptly execute inspection of the reproducing apparatus.

According to still another aspect, the recording medium in which a signal is recorded according to set values for deteriorating a quality of a reproduced signal of indexes representing magnitudes of causes affecting deterioration in a quality of a reproduced signal at the time of signal reproduction is used. This makes it possible to solve the problem of reproduction failure of the reproducing apparatus due to irregularity of a reproduced waveform.

According to still another aspect, the recording medium that divides and records a plurality of signals recorded according to different set values in a plurality of areas is used. This makes it possible to eliminate the necessity of replacing the recording medium and reduce burdens on an operator.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A method of manufacturing a reproducing apparatus that reproduces a signal recorded in a recording medium, the method comprising:

    reproducing a signal from a recording medium in which the signal is recorded according to a set value, the set value being a value that causes deterioration in a quality of a reproduced signal of an index representing a magnitude of a cause affecting deterioration in a quality of a reproduced signal at the time of signal reproduction; and
    determining, based on reproduced signal, whether there is a deficiency in the reproducing apparatus.

2. The method according to claim 1, wherein the determining includes, when determining that there is a deficiency in the reproducing apparatus, a cause of the deficiency in the reproducing apparatus based on the set value and the reproduced signal.

3. The method according to claim 1, wherein
    the reproducing includes reproducing signals from a plurality of recording media in which signals are recorded according to corresponding set values, and
    the determining includes determining, based on signals reproduced from respective recording media, whether there is a deficiency in the reproducing apparatus.

4. The method according to claim 3, wherein the reproducing includes reproducing signals from some of the recording media, and the determining includes determining, based on the signals reproduced from the recording media, whether there is a deficiency in the reproducing apparatus.

5. The method according to claim 1, wherein the recording medium is a recording medium that records a signal according to a thermal change of a medium due to a laser beam.

6. The method according to claim 3, wherein the set values of the signals recorded in the recording media are set to levels indicated by an orthogonal array.

7. The method according to claim 4, wherein the set values of the signals recorded in the recording media are set to levels indicated by an orthogonal array with three levels, reproducing includes reproducing signals of recording media in which the signals are recorded according to three kinds of set values corresponding to the orthogonal array with three levels are reproduced, and the determining includes determining, based on the signals reproduced at the reproducing, whether there is a deficiency in the reproducing apparatus.

8. The method according to claim 1, wherein the cause of the deterioration in a quality of a reproduced signal at the time of signal reproduction is a degree of modulation.

9. The method according to claim 1, wherein the cause of the deterioration in a quality of a reproduced signal at the time of signal reproduction is symmetry.

10. The method according to claim 1, wherein the cause of the deterioration in a quality of a reproduced signal at the time of signal reproduction is heat accumulation.

11. The method according to claim 1, wherein the cause of the deterioration in a quality of a reproduced signal at the time of signal reproduction is deviation of tracking.

12. The method according to claim 1, wherein the cause of the deterioration in a quality of a reproduced signal at the time of signal reproduction is defocus.

13. The method according to claim 1, wherein the cause of the deterioration in a quality of a reproduced signal at the time of signal reproduction is crosstalk due to power-over of recording in adjacent tracks.

14. The method according to claim 1, wherein the recording medium a plurality of areas and a set value is set corresponding to each of the area, the reproducing includes reproducing signals recorded in respective areas, and the determining includes determining, based on the signals reproduced from the respective areas of the recording medium, whether there is a deficiency in the reproducing apparatus.

15. A recording medium that records a signal representative of data, wherein the signal is recorded according to a set value for deteriorating a quality of a reproduced signal of an index representing a magnitude of a cause affecting deterioration in a quality of a reproduced signal at the time of signal reproduction.

16. The recording medium according to claim 15, wherein a plurality of signals with different set values are recorded in corresponding areas of the recording medium.

17. The recording medium according to claim 16, wherein the cause of the deterioration in a quality of a reproduced signal at the time of signal reproduction includes at least one of a degree of modulation, symmetry, heat accumulation, deviation of tracking, defocus, crosstalk due to power-over of recording in adjacent tracks, warp of a substrate, and a deviation of a substrate thickness.

18. A computer-readable recording medium that stores therein a computer program that causes a computer to implement manufacturing a reproducing apparatus that reproduces a signal recorded in a recording medium, the computer program causing the computer to execute:

    reproducing a signal from a recording medium in which the signal is recorded according to a set value, the set value being a value that causes deterioration in a quality of a reproduced signal of an index representing a magnitude of a cause affecting deterioration in a quality of a reproduced signal at the time of signal reproduction; and determining, based on reproduced signal, whether there is a deficiency in the reproducing apparatus.

19. The computer-readable recording medium according to claim 18, wherein the determining includes, when determining that there is a deficiency in the reproducing apparatus, a cause of the deficiency in the reproducing apparatus based on the set value and the reproduced signal.

**20.** The computer-readable recording medium according to claim 18, wherein
the reproducing includes reproducing signals from a plurality of recording media in which signals are recorded according to corresponding set values, and
the determining includes determining, based on signals reproduced from respective recording media, whether there is a deficiency in the reproducing apparatus.

**21.** The computer-readable recording medium according to claim 20, wherein
the reproducing includes reproducing signals from some of the recording media, and
the determining includes determining, based on the signals reproduced from the recording media, whether there is a deficiency in the reproducing apparatus.

**22.** The computer-readable recording medium according to claim 18, wherein the recording medium is a recording medium that records a signal according to a thermal change of a medium due to a laser beam.

# FIG.1

P3   P4

P1   P2

T1   T2   T3   T4

3T

4T

5T

# FIG.2

RECORDING
MEDIUM

MARK

LASER
BEAM

# FIG.3

# FIG.4

# FIG.5

TRACKING
DEVIATION

GUIDE
GROOVE

# FIG.6

DEFOCUS

GUIDE
GROOVE

# FIG.7

MARKS RECORDED
WITH OVER POWER

MARKS RECORDED
WITH OVER POWER

GUIDE GROOVES FOR
TRACKING

# FIG.8

## FIG.9

## FIG.10

EP 1 858 016 A1

ORTHOGONAL ARRAY

| FACTOR NAME | A | B | C | D | E | F | G | H | JITTER MEASUREMENT RESULT | | |
|---|---|---|---|---|---|---|---|---|---|---|---|
| | e | e | DEGREE OF MODULA-TION | SYMME-TRY | ACCUMU-LATED HEAT | TRACKING DEVIATION | DEFOCUS | POWER OF RECORDING IN ADJACENT TRACKS | | | |
| LEVEL(1) | | | 0.8 | -0.05 | 0.1 | 0 (μm) | 0 (μm) | REFERENCE POWER | | | |
| (2) | | | 0.7 | -0.10 | 0.20 | 0.1 (μm) | 0.1 (μm) | 7% UP | | | |
| (3) | | | 0.6 | -0.15 | 0.30 | 0.2 (μm) | 0.2 (μm) | 14% UP | | | |
| No.1 | (1) | (1) | (1) | (1) | (1) | (1) | (1) | (1) | $y_1$ | N1 | OPTIMUM |
| No.2 | (1) | (1) | (2) | (2) | (2) | (2) | (2) | (2) | $y_2$ | N2 | INTERMEDIATE LEVEL |
| No.3 | (1) | (1) | (3) | (3) | (3) | (3) | (3) | (3) | $y_3$ | N3 | WORST |
| No.4 | (1) | (2) | (1) | (1) | (2) | (2) | (3) | (3) | $y_4$ | | |
| No.5 | (1) | (2) | (2) | (2) | (3) | (3) | (1) | (1) | $y_5$ | | |
| No.6 | (1) | (2) | (3) | (3) | (1) | (1) | (2) | (2) | $y_6$ | | |
| No.7 | (1) | (3) | (1) | (2) | (1) | (3) | (2) | (3) | $y_7$ | | |
| No.8 | (1) | (3) | (2) | (3) | (2) | (1) | (3) | (1) | $y_8$ | | |
| No.9 | (1) | (3) | (3) | (1) | (3) | (2) | (1) | (2) | $y_9$ | | |
| No.10 | (2) | (1) | (1) | (3) | (3) | (2) | (2) | (1) | $y_{10}$ | | |
| No.11 | (2) | (1) | (2) | (1) | (1) | (3) | (3) | (2) | $y_{11}$ | | |
| No.12 | (2) | (1) | (3) | (2) | (2) | (1) | (1) | (3) | $y_{12}$ | | |
| No.13 | (2) | (2) | (1) | (2) | (3) | (1) | (3) | (2) | $y_{13}$ | | |
| No.14 | (2) | (2) | (2) | (3) | (1) | (2) | (1) | (3) | $y_{14}$ | | |
| No.15 | (2) | (2) | (3) | (1) | (2) | (3) | (2) | (1) | $y_{15}$ | | |
| No.16 | (2) | (3) | (1) | (3) | (2) | (3) | (1) | (2) | $y_{16}$ | | |
| No.17 | (2) | (3) | (2) | (1) | (3) | (1) | (2) | (3) | $y_{17}$ | | |
| No.18 | (2) | (3) | (3) | (2) | (1) | (2) | (3) | (1) | $y_{18}$ | | |

FIG.11

# FIG.12

JITTER METER
20

INSPECTION
APPARATUS
100

N1
N2
N3

10
REPRODUCING
APPARATUS

# FIG.13

100

INSPECTION APPARATUS

CONTROL UNIT
160

RADIAL-POSITION
CONTROL UNIT
160a

ORTHOGONAL-ARRAY
MANAGING UNIT
160b

DEFICIENCY
DETERMINING UNIT
160c

CAUSE DETERMINING
UNIT
160d

COMMUNICATION
CONTROL I/F UNIT
140

INPUT/OUTPUT
CONTROL I/F UNIT
130

INPUT UNIT
110

OUTPUT UNIT
120

STORING
UNIT
150

ORTHOGONAL
ARRAY
150a

# FIG.14

| FACTOR NAME | DEGREE OF MODULATION | SYMMETRY | ACCUMULATED HEAT | TRACKING DEVIATION | DEFOCUS | POWER OF RECORDING IN ADJACENT TRACKS | OTHERS |
|---|---|---|---|---|---|---|---|
| CONTRIBUTION RATIO (%) | 5 | 7 | 35 | 8 | 10 | 9 | 26 |

EP 1 858 016 A1

# FIG.15

START

ACQUIRE MEASUREMENT VALUES OF JITTERS RELATED TO N1 TO N3 RECORDING MEDIA — S101

CALCULATE EVALUATION VALUE — S102

COMPARE EVALUATION VALUE AND REFERENCE VALUE — S103

S104

EQUAL TO OR MORE THAN REFERENCE VALUE? — YES

NO — S106

OUTPUT INDICATION THAT ADJUSTMENT OF REPRODUCING APPARATUS TO BE INSPECTED IS NECESSARY

S105

OUTPUT INDICATION THAT REPRODUCING APPARATUS TO BE INSPECTED IS NORMAL

ACQUIRE MEASUREMENT VALUES OF JITTERS RELATED TO NO. 1 TO NO. 18 RECORDING MEDIA — S107

CALCULATE CONTRIBUTION RATIO BASED ON ORTHOGONAL ARRAY — S108

DETERMINE ELEMENT WITH LARGEST CONTRIBUTION RATIO — S109

OUTPUT DETERMINATION RESULT — S110

END

# FIG.16

No.18    No.17      No.1      TOC

. . .

# FIG.17

EP 1 858 016 A1

COMPUTER

INPUT DEVICE 30

MONITOR 31

RAM 32

VARIOUS DATA 32a

ROM 33

38 BUS

MEDIUM READING DEVICE 34

NETWORK INTERFACE 35

HDD 37

VARIOUS DATA 37a

CPU 36

VARIOUS PROCESSES 36a

VARIOUS PROGRAMS 37b

European Patent
Office

**EUROPEAN SEARCH REPORT**

Application Number

EP 06 11 6867

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 5 526 341 A (SHIBA MITSUO [JP] ET AL) 11 June 1996 (1996-06-11) | 1,2, 14-16, 18,19 | INV. G11B20/18 G11B20/10 |
| Y | * column 4, line 1 - column 6, line 44 * | 5-13,17, 22 | G11B20/12 G11B7/24 G11B7/26 |
| X | US 5 740 151 A (KOH YOUNG-OK [KR]) 14 April 1998 (1998-04-14) * the whole document * | 1-4,15, 18,20,21 | G11B19/04 G11B27/36 |
| Y | EP 1 434 210 A2 (RICOH KK [JP]) 30 June 2004 (2004-06-30) * paragraphs [0036] - [0043] * * paragraphs [0050] - [0059] * | 5-13,17, 22 | |
| X | EP 0 402 002 A2 (SONY CORP [JP]) 12 December 1990 (1990-12-12) * the whole document * | 1,2, 14-16, 18,19 | |
| X | US 5 912 874 A (GARDNER TIMOTHY STUART [US] ET AL) 15 June 1999 (1999-06-15) * column 3, line 41 - column 7, line 28; figures 1,2 * | 1,5, 14-16, 18,22 | TECHNICAL FIELDS SEARCHED (IPC) G11B |
| X | US 6 181 654 B1 (SHOJI MAMORU [JP] ET AL) 30 January 2001 (2001-01-30) | 15-18 | |
| A | * column 12, lines 10-18 * * column 1, line 17 - column 2, line 16 * | 10 | |

The present search report has been drawn up for all claims

| Place of search | Date of completion of the search | Examiner |
|---|---|---|
| The Hague | 13 August 2007 | Hermes, Lothar |

**ANNEX TO THE EUROPEAN SEARCH REPORT
ON EUROPEAN PATENT APPLICATION NO.**

EP 06 11 6867

This annex lists the patent family members relating to the patent documents cited in the above-mentioned European search report.
The members are as contained in the European Patent Office EDP file on
The European Patent Office is in no way liable for these particulars which are merely given for the purpose of information.

13-08-2007

| Patent document cited in search report | | Publication date | Patent family member(s) | | Publication date |
|---|---|---|---|---|---|
| US 5526341 | A | 11-06-1996 | NONE | | |
| US 5740151 | A | 14-04-1998 | JP | 9212996 A | 15-08-1997 |
| EP 1434210 | A2 | 30-06-2004 | US | 2004165523 A1 | 26-08-2004 |
| EP 0402002 | A2 | 12-12-1990 | AT | 122814 T | 15-06-1995 |
| | | | AU | 640928 B2 | 09-09-1993 |
| | | | AU | 5519990 A | 06-12-1990 |
| | | | BR | 9002641 A | 20-08-1991 |
| | | | CA | 2018168 A1 | 05-12-1990 |
| | | | DE | 69019419 D1 | 22-06-1995 |
| | | | DE | 69019419 T2 | 05-10-1995 |
| | | | ES | 2072391 T3 | 16-07-1995 |
| | | | US | 5258974 A | 02-11-1993 |
| US 5912874 | A | 15-06-1999 | NONE | | |
| US 6181654 | B1 | 30-01-2001 | US | 6212142 B1 | 03-04-2001 |
| | | | US | 6178148 B1 | 23-01-2001 |
| | | | US | 6101159 A | 08-08-2000 |
| | | | US | 6175541 B1 | 16-01-2001 |
| | | | US | 6233211 B1 | 15-05-2001 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3674545 B
- JP H10233040 A
- JP H1083506 A

- JP 2000322782 A
- JP 2002334481 A
- JP H9274741 B